# EUROPEAN PATENT APPLICATION

(11) **EP 2 712 849 A1**
(43) Date of publication of application: **02.04.2014**
(21) Application number: 13186168.4
(22) Date of filing: 26.09.2013
(51) Int. Cl.: C03C 3/087, C03C 4/00

(54) **A flat glass application with low iron content**

(30) Priority: 28.09.2012 TR 201211070
(71) Applicant: Türkiye Sise Ve Cam Fabrikalari A.S., 34330 Istanbul (TR)
(72) Inventor: Akmaz, Fehiman, 34330 ISTANBUL (TR); Sesigur, Hande, 34330 ISTANBUL (TR)
(74) Representative: Kaya, Erdem

(57) **Abstract**

A 2-12 mm flat glass consisting of components with below percentages per weight

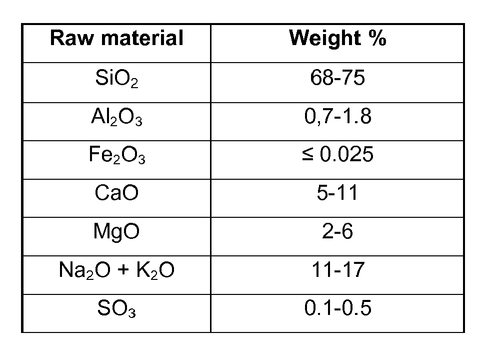

is **characterized in that** in order for said flat glass to have a daylight transmittance of minimum 90 ± 1 %, a solar energy transmittance of minimum 87 ± 1 % and a redox ratio of iron ≤ 0.25; the Fe⁺² ions, arising from Fe₂O₃ in said flat glass batch, is at a maximum value of 0.006% in weight and said flat glass includes the below mentioned component percentages by weight for the iron inside said batch to be oxidized and passivated:

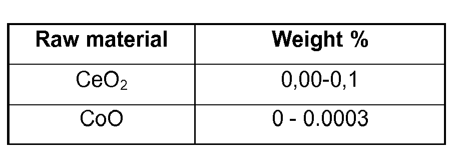

## Description

### TECHNICAL FIELD

Present invention is related to a light colored flat glass application. In more specific terms, invention is related to a light colored glass composition which features a highly apparent transmittance preferred in furniture sector applications.

### PRIOR ART

Glass is simply a transparent, smooth and fragile material. To express in a general definition, glass is an amorphous material which is composed with cooling of high viscosity, homogeneous and pure melt to room temperature quickly, which is composed with melting of the mixture at high temperatures. During production, amorphous structure is composed instead of crystal structure due to rapid cooling. Glass hardens by maintaining its amorphous structure. This structure gives glass its transparency feature.

Methods of flat glass production are widely known in industrial area. The most common method is the floatation (technically known as float) method. Surfaces are parallel to each other in glass plates obtained by this method; glass can be obtained with very smooth and very shiny surfaces without the need for polishing or a similar process.

High daylight transmittance is desired especially in glasses used in furniture sector. But obtaining the preferred high optical quality in furniture sector in normal flat glass products is not very easy. Even though high purity grade raw materials are used in the glass batches, impurities such as a very little amount of iron oxide may come from raw materials used in the batch. Iron oxide coming from batch causes negative effect both on the color and optical properties of glass. The objective is to enable flat glass products of all thicknesses containing low iron oxide which are produced by float technology to have high optical values.

The most important optical properties for flat glasses are daylight transmittance and solar energy transmittance. Since optical properties of glass change inversely proportional to the thickness of glass, these two transmittance values also change depending on the thickness. For example, if daylight transmittance of a 4 mm thick glass is 89% and solar energy transmittance is 82%, the relevant values of a 8 mm thick glass from the same batch would be 87% and 75%, respectively. The more the thickness of glass increases, the more daylight transmittance and solar energy transmittance decreases.

Another parameter which affects optical properties of glasses is their chemical content. Iron oxide which is added into the batch to be produced with raw materials containing low iron oxide, for coloring purposes or comes from other raw materials as impurity in colorless glasses, gives green color to the glass and changes the daylight transmittance and solar energy transmittance values. If the glass to be produced is a high quality colorless glass, iron oxide that will come from raw materials as impurity should be minimized firstly and then oxidation condition should be adjusted. There are applications used for this purpose.

In the European Patent with the number EP2261183, a 4 mm thick glass which contains manganese oxide and cerium oxide in its batch as oxidant substances has a daylight transmittance of 90% and above.

In the European Patent with the number EP1480917, a 1mm - 6mm thick glass which contains 0.03 - 0.13% erbium oxide and 0.03 - 0.12% cerium oxide in its content has a daylight transmittance of minimum 75%.

The invention subject to the American Patent with the number US2010152014 contains chromium oxide at a ratio of 1-5 ppm and cobalt oxide at a ratio of 0.3-10 ppm to be used for physical decolorisation. Daylight transmittance value is at least around 85%. There is no cerium oxide in the glass composition subject to said patent.

In the Canadian Patent with the number CA2744380, optical properties of a 5.5 mm thick glass which contains 0.0025% cerium oxide were reviewed and daylight transmittance measured according to C.I.E. standards was 85% and above whereas solar energy transmittance was 89% and above.

In the current technique, soda-lime-silica glasses with a 0.02% Fe₂O₃ content can be produced. But in the decolorisation processes applied for improving the optical properties, additives such as erbium oxide, manganese oxide, cerium oxide are used as mentioned in the above stated examples. Use of these additives increases production costs.

As a consequence, all the above stated problems and purpose of obtaining the minimum cost by using additives at optimum level created the need to make an improvement in the relevant technical field.

### BRIEF DESCRIPTION OF THE INVENTION

The present invention is related to a glass composition to be produced, aimed at eliminating the abovementioned disadvantages and bringing new advantages to the relevant technical field.

Main objective of the invention is to provide a glass which has a thickness of 2-12 mm, low level of iron, a daylight transmittance of minimum 90 ± 1 % and a solar energy transmittance of minimum 87 ± 1 %.

In order to perform all of the abovementioned objectives and the objectives which are to be deducted from the detailed description below, the present invention is a flat glass application with a 2-12 mm thickness and component percentages by weight as specified below.

| **Raw material** | **Weight %** |
|---|---|
| SiO₂ | 68-75 |
| Al₂O₃ | 0,7-1.8 |
| Fe₂O₃ | ≤ 0.025 |
| CaO | 5-11 |
| MgO | 2-6 |
| Na₂O + K₂O | 11-17 |
| SO₃ | 0.1-0.5 |

According to this, in order for said flat glass to have a daylight transmittance of minimum 90 ± 1 %, a solar energy transmittance of minimum 87 ± 1 % and a redox ratio of iron ≤ 0.25; the Fe⁺² ions, arising from Fe₂O₃ in said flat glass batch, is at a maximum value of 0.006% in weight and said flat glass includes the below mentioned component percentages by weight for the iron inside said batch to be oxidized and passivated.

| **Raw material** | **Weight %** |
|---|---|
| CeO₂ | 0,01-0,1 |
| CoO | 0 - 0.0003 |

In a preferred embodiment of the subject matter invention, Fe⁺² ions arising from Fe₂O₃ in said flat glass have a maximum ratio of 0.005% per weight.

In another preferred embodiment of the subject matter invention, redox ratio in said flat glass (Fe²⁺/ Fe₂O₃) is preferably at a value of 0,15.

In another preferred embodiment of the subject matter invention, it contains Fe₂O₃ at a maximum ratio of 0.025% per weight.

In another preferred embodiment of the subject matter invention, color coordination is as a: > -1.0 and b: -0.15- (+0.30) according to ASTM 308-2008 standards.

In another preferred embodiment of the subject matter invention, it contains SiO₂ at a ratio of 70-73% per weight.

In another preferred embodiment of the subject matter invention, it contains Al₂O₃ at a ratio of 1-1.5% per weight.

In another preferred embodiment of the subject matter invention, it contains alkaline oxide (Na₂O + K₂O total) as a melter at a ratio of 13-15% per weight.

In another preferred embodiment of the subject matter invention, it contains alkaline earth oxide (CaO + MgO total) as a stabilizer at a ratio of 11-13% per weight.

In another preferred embodiment of the subject matter invention, it contains SO₃ at a ratio of 0.2-0.4%.

In another preferred embodiment of the subject matter invention, it contains CeO₂ used for decolorisation at a ratio of <0.05 per weight.

In another preferred embodiment of the subject matter invention, it contains CoO at a ratio ≤ 0.0001 per weight.

### BRIEF DESCRIPTION OF THE FIGURES

In Figure 1, daylight transmittance graph related to glass with low iron content and flat glass has been given. In the graph, glass with low amount of iron is shown with -◆-whereas glass with normal amount of iron is shown with a dash (-).

In Figure 2, a glass thickness - transmittance graph related to glass with low iron has been given. In the graph, daylight transmittance value is shown with -◆- whereas solar energy transmittance is shown with a dash (-).

In Figure 3, glass color coordinate graph has been given.

### DETAILED DESCRIPTION OF THE INVENTION

In this detailed description, the subject matter invention is explained with references to examples without forming any restrictive effect in order to make the subject more understandable.

Invention is related to a glass with high transmittance; more specifically, a soda-lime-silica glass with low iron content (a total value of iron less than 0.025%) and high transmittance prepared to be used preferably in furniture sector, and production method of this glass.

In our invention, float process has been used for glass production. In float process, thickness of the produced glass may vary depending on its purpose of use, and between 2 mm and 20 mm. Invention is related to 2-12 mm thick glass application.

In this section, preferred embodiment of present invention has been explained by giving the percentages of each component per weight. Daylight transmittance values according to EN 140 standards and color values according to ASTM 308-2008 standards have also been given for 2-12 mm thick glasses.

Subject of the invention, a flat glass with low iron content consists of components whose percentages per weight have been given in Table 1 and each of which can be added into the mixture and transformed into finished production by heat treatment.

**Table 1: Glass components (oxides) and their percentages per weight**

| **Oxides** | **Weight %** |
|---|---|
| SiO₂ | 72 |
| Al₂O₃ | 1-1.5 |
| Fe₂O₃ | ≤ 0.025 |
| CaO | 8-9 |
| MgO | 4-5 |
| Na₂O + K₂O | 13.5-14.5 |
| SO₃ | 0.2-0.4 |
| CeO₂ | 0-0,05 |
| CoO | 0-0.0001 |

Subject of the invention, a flat glass with low iron content is a light colored glass application with high optical properties and low cost. Use of iron oxide at a percentage of 0.025 % or below per weight in this application has shown an impressively positive effect on color and optical properties of produced glass, enabled the glass to be quite light colored and increased its transmittance.

But even though high purity grade raw materials are used in the glass batches, a little iron oxide may merge into the structure as an impurity.

Iron oxide which comes from other raw materials in colorless float glasses as impurity gives a greenish color to the glass. Since human eye is sensitive to green mostly, this situation is easily perceived. Decolorisation is the masking process of color provided by Fe₂O₃ that comes from raw materials in colorless glasses as impurity.

Iron is found in the form of Fe⁺²(ferrous) and Fe⁺³ (ferric) in soda-lime glasses. Fe⁺² gives blue green color whereas Fe⁺³ gives yellow green color to glass. Provided that they are in the same concentration, color given to glass by Fe⁺² is about 10 times more intense than the color given by Fe⁺³. Fe⁺² have a strong absorption centered at 1050 nm wave length at infra-red zone. This absorption band continues until 500 nm wave length at the visible zone and provides sun control function. Fe⁺³, on the other hand, has an absorption band which is centered at 440-430 and 380 nm wave lengths at the visible zone and continues at the ultraviolet zone. Color provided by iron to the glass varies depending on the Fe⁺²/Fe⁺³ ratio.

Decolorisation process is carried out mainly at two levels defined as chemical and physical:

**1. Chemical Decolorisation:** It is the transformation of glass color from bluish green to yellowish green which is perceived with less sensitivity, by decreasing the Fe⁺²/Fe⁺³ ratio in the glass as much as possible with the addition of oxidant substance into the batch, and oxidizing the available Fe⁺² ions to Fe⁺³. For this purpose, CeO₂, sodium sulfate and sodium nitrate are added into the batch.

Sodium sulfate, which acts as a chemical decolorisation agent in glass batch, enables the solid batch particles to be dissolved rapidly during melting of raw materials in the furnace and reaction gases to be eliminated from the environment easily. It is also defined as affination substance due to this function. In oxidant glasses, sodium sulphate performs the below stated reactions at 1450°C in the furnace and thus some of the sulphurous gases that are discharged dissolve in the glass and some are disposed out through the chimney:

Na₂SO₄ + SiO₂ → Na₂O.SiO₂ + SO₃

SO₃ → SO₂ +½ O₂

Na₂SO₄ + SiO₂ → Na₂O.SiO₂ + SO₂ +½ O₂

For this reason, if sulphate is used more than necessary and at high furnace temperatures, foaming may occur. In order to eliminate this disadvantage, the amount added into the batch should be optimized.

Sodium nitrate (NaNO₃) prevents the impurities from reducing the iron oxide in glass by oxidizing the organic substances which are found as impurities into the batch during melting of the glass. It also has a quickening effect for melting.

Another oxidant substance found in glass batch is CeO₂. CeO₂ is used for oxidizing the iron and transforming the bluish green color that is provided by + bivalent iron into a less visible form. CeO₂ amount in the batch is lower than a value of 0.05% as an average.

In order to provide decolorisation in the glass; physical decolorisation is performed in addition to chemical decolorisation.

**2. Physical Decolorisation:** It is the masking of yellowish green that is created as a result of chemical decolorisation, physically with substances providing complementary color so as to obtain a neutral color.

After the available iron that comes from the batch is oxidized to Fe⁺³, yellowish green color provided by Fe⁺³ is physically masked with oxidants such as Mn, Se, Ni, Co, Er which provide complementary colors. In our study, cobalt oxide (CoO) addition which provides blue color to the glass has been preferred in order to mask the passive color of Fe⁺³ for physical decolorisation. Amount of cobalt oxide (CoO) used is 0-0.0001 % per weight. Since amount of cobalt oxide (CoO) is just enough to mask the color provided by iron, it is not sufficient to provide blue color to the glass.

Information regarding iron content in the mixture is given in Table 2.

**Table 2: Iron content information**

| **Chemical Structure** | **Weight %** |
|---|---|
| Fe²⁺ (as Fe₂O₃) | < 0.005 |
| Fe²⁺/ Fe₂O₃ | < 0.25 |

Optical properties of the 2-12 mm thick glasses prepared according to the above specified ratios and float technique are as below, as a result of measurements performed according to EN410 standards:
- Daylight transmittance: 90 ± 1 %
- Solar energy transmittance: 87 ± 1 %

When values of a standard glass is compared with those of 8 mm thick glass with low iron content produced by this invention, there is a quite significant difference between the optical values as seen in Table 2:

**Table 2: Optical values comparison table**

| **Sample Description** | **Standard Thickness (mm)** | **Daylight Transmittance (%)** | **Solar Energy Direct Transmittance (%)** |
|---|---|---|---|
| **Glass with Low Iron Content** | 8 | 91 | 88 |
| **Standard Glass** | 8 | 87 | 75 |

Referring to Table 2, as the iron ratio decreased, an obvious increase has occurred in the daylight transmittance and solar energy transmittance values of the glass. The reason for this is the color that iron provides to the glass. Transmittance decreases inversely proportional to the increase in this color. Considering that the highest daylight transmittance value that a bare glass can reach is 92%, a daylight transmittance value of 91 % obtained with subject invention glass containing low iron is quite high.

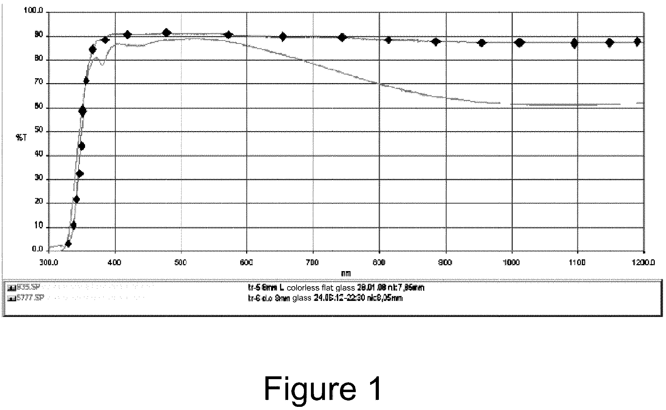

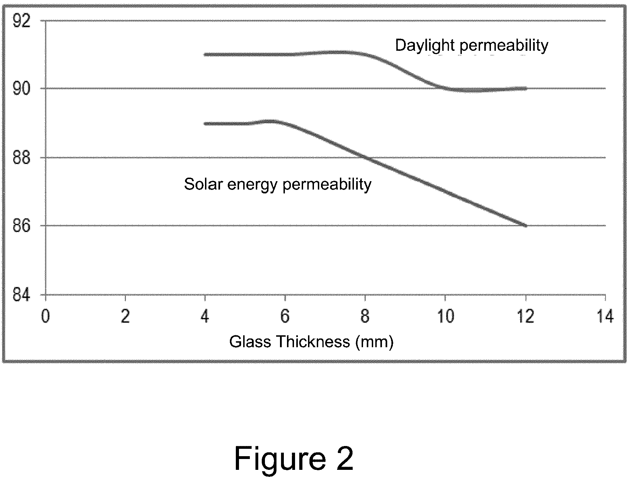

The dash 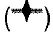 that is on top of the graph given in Figure 1 represents the values of glass with low iron content. Dash 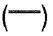 at the bottom represents the values of standard glass. As is seen in the figure, due to the high level of Fe₂O₃ that 8 mm thick standard glass contains, transmittance value decreases. Some of the sunlight that comes to the surface of glass is transmitted through the glass (T), some is absorbed by the glass (A) and some is reflected back (R). Sum of all these parameters (T+A+R) is 100. If no process is applied on the surface of glass, reflection remains stable. For this reason, as the absorption of glass increases, transmittance decreases. Hence, this situation is confirmed in Figure 2. The fact that iron oxide content is higher in standard glass increases the absorption of glass and decreases the transmittance. Particularly because maximum absorption of Fe⁺² is at high wave lengths such as 1050 nm, as the wave length increases, transmittance decreases.

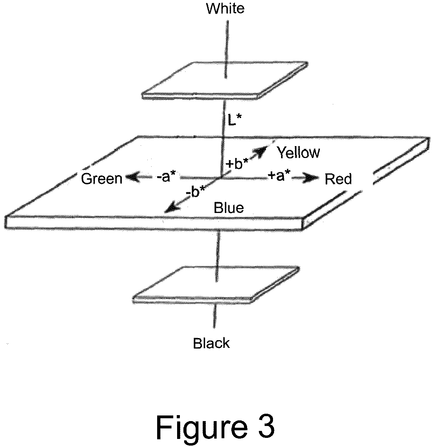

Referring to Figure 3 and Table 3; with the increase in thickness of the glass, a decrease occurs in the daylight transmittance and solar energy transmittance values of glasses with different thicknesses. This shows that there is an inverse proportion between glass thickness and transmittance. Since absorption of iron content increases with the increase in glass thickness, increased amount of iron causes a decrease in the transmittance of glass. But as is seen apparently in Table 3, in glasses with low iron content, a very little amount of decrease occurs in the daylight transmittance values despite the increase in thickness. Reflection, on the other hand, is stable as mentioned above.

**Table 3: Optical values of glass with low iron content**

| **Standard Thickness (mm)** | **Daylight** | | **Solar Energy** | | **L** | **a** | **b** |
|---|---|---|---|---|---|---|---|
| | **Transmittance (%)** | **Reflection (%)** | **Reflection (%)** | **Direct Transmittance (%)** | | | |
| 4 | 91 | 8 | 8 | 89 | 97 | -0,26 | -0,04 |
| 5 | 91 | 8 | 8 | 89 | 97 | -0,31 | -0,07 |
| 6 | 91 | 8 | 8 | 89 | 96 | -0,36 | 0,04 |
| 8 | 91 | 8 | 8 | 88 | 96 | -0,52 | -0,01 |
| 10 | 90 | 8 | 8 | 87 | 96 | -0,65 | -0,08 |
| 12 | 90 | 8 | 8 | 86 | 96 | -0,75 | -0,07 |

Color coordinate values of the 2-12 mm thick glasses prepared according to previously specified ratios and float technique are as below, as a result of measurements performed according to ASTM 308-2008 standards:
- L: 96
- a: > -1.0
- b: -0.15 - (+0.30)

L*a*b* values are calculated over Tristimulus values. In this system, color location of available color is determined in the three dimensional Cartesian coordinate system. Figure 4 shows the color diagram of L*a*b* system. a* axis moves from left to right, i.e. from green (-a) to red (+a), and b* axis moves from blue (-b) to yellow (+b). L* in the middle shows; L=100 white at the peak point and L=0 black at the bottom point. It defines the neutral color in the middle.

**Table 4: L-a-b values comparison table**

| **Sample Description** | **Standard Thickness (mm)** | **L** | **a** | **b** |
|---|---|---|---|---|
| Low Iron Production | 8 | 96 | -0.52 | -0.01 |
| Low Iron Production | 12 | 96 | -0,75 | -0,07 |
| Normal Iron Production | 8 | 95 | -2.50 | 0.20 |

Values "a and b" from the optical properties represent axes on the coordinate plane. As is seen in Table 4, values "a and b" are too close to the axis even at a glass thickness of 12 mm. This indicates that glass produced with low iron content gets decolorized.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. A 2-12 mm flat glass consisting of components with below percentages per weight
| **Raw material** | **Weight %** |
|---|---|
| SiO₂ | 68-75 |
| Al₂O₃ | 0,7-1.8 |
| Fe₂O₃ | ≤ 0.025 |
| CaO | 5-11 |
| MgO | 2-6 |
| Na₂O + K₂O | 11-17 |
| SO₃ | 0.1-0.5 |
is **characterized in that** in order for said flat glass to have a daylight transmittance of minimum 90 ± 1 %, a solar energy transmittance of minimum 87 ± 1 % and a redox ratio of iron ≤ 0.25; the Fe⁺² ions, arising from Fe₂O₃ in said flat glass batch, is at a maximum value of 0.006% in weight and said flat glass includes the below mentioned component percentages by weight for the iron inside said batch to be oxidized and passivated:
| **Raw material** | **Weight %** |
|---|---|
| CeO₂ | 0,00-0,1 |
| CoO | 0 - 0.0003 |

2. A flat glass according to Claim 1, **characterized in that** Fe⁺² ions arising from Fe₂O₃ in said flat glass have a maximum ratio of 0.005% per weight.

3. A flat glass according to Claim 1, **characterized in that** redox ratio in said flat glass (Fe²⁺/ Fe₂O₃) is preferably at a value of 0.15.

4. A flat glass according to Claim 1, **characterized in that** it contains Fe₂O₃ at a maximum ratio of 0.025% per weight.

5. A flat glass according to Claim 1, **characterized in that** color coordination is as a: > -1.0 and b: -0.15- (+0.30) according to ASTM 308-2008 standards.

6. A flat glass according to Claim 1, **characterized in that** it contains SiO₂ at a ratio of 70-73% per weight.

7. A flat glass according to Claim 1, **characterized in that** it contains Al₂O₃ at a ratio of 1-1.5% per weight.

8. A flat glass according to Claim 1, **characterized in that** it contains alkaline oxide (Na₂O + K₂O total) as a melter at a ratio of 13-15% per weight.

9. A flat glass according to Claim 1, **characterized in that** it contains alkaline earth oxide (CaO + MgO total) as a stabilizer at a ratio of 11-13% per weight.

10. A flat glass according to Claim 1, **characterized in that** it contains SO₃ at a ratio of 0.2-0.4%.

11. A flat glass according to Claim 1, **characterized in that** it contains CeO₂ used for decolorisation at a ratio of <0.05 per weight.

12. A flat glass according to Claim 1, **characterized in that** it contains CoO at a ratio of <0,0001 per weight.
